# EUROPEAN PATENT APPLICATION

(11) **EP 0 921 521 A2**
(43) Date of publication of application: **09.06.1999**
(21) Application number: 98309561.3
(22) Date of filing: 23.11.1998
(51) Int. Cl.: G11B 7/135

(54) **Optical pickup using objective lens compatible with a plurality of optical disks**

(30) Priority: 05.12.1997 KR 9766390
(71) Applicant: SAMSUNG ELECTRONICS CO., LTD., Suwon-City, Kyungki-do (KR)
(72) Inventor: Yoo, Jang-Hoon, Youngdungpo-gu, Seoul (KR); Lee, Yong-Jae, Kwonsun-gu, Suwon-city, Kyungki-do (KR); Seong, Pyong-Yong, Songpa-gu, Seoul (KR); Lee, Chul-Woo, Yongsan-gu, Seoul (KR)
(74) Representative: Chugg, David John

(57) **Abstract**

An optical pickup including an objective lens which is compatible with a plurality of optical disks of a respectively different specification such as a digital versatile disk (DVD), a compact disk-recordable (CD-R), a compact disk (CD) and a laser disk (LD) is provided, which includes at least one laser source (31), an objective lens (35) for focusing the light emitted from the laser source (31) on a respective information recording surface of a plurality of optical recording media (36, 40) as an optimal optical spot, and an optical detector (37) for detecting the light having reflected from the information recording surface of the optical recording medium (36, 40) on which the optical spot has been focused and then having transmitted through the objective lens (35). Thus, the optical pickup can be compatible with a plurality of the optical disks of a respectively different specification irrespective of the thickness of the disk.

## Description

The present invention relates to an optical pickup having a function of forming an optical spot on an information recording surface in each of optical recording media having different specifications such as disk thickness and use wavelength, and more particularly, to an optical pickup which includes an objective lens compatible with a plurality of optical disks each of which has a different specification.

There are a disk, a card or a tape as a recording medium for recording and reproducing information such as video, audio or data at high density. Among them, a disk-shaped recording medium is mainly used. Such an optical disk is comprised of a plastic or glass medium having a uniform thickness in axial direction where light is incident, and an information recording surface located on the medium and on which information is recorded. Recently, a laser disk (LD), a compact disk (CD), and a digital versatile disk (DVD) have been developed as an optical disk device.

A recently commercialized high-density optical disk system enlarges a numerical aperture of an objective lens and uses a short-wavelength light source of 635nm or 650nm, in order to heighten a recording density. As a result, the optical disk system can record and reproduce information with respect to a DVD and can also reproduce information recorded on a CD having a thickness different from that of the DVD. However, the high-density digital optical disk system has to use light whose wavelength is 780nm, in order to compatibly use a CD-recordable (CD-R) which is a recent CD pattern. This is due to a recording characteristic of a CD-R recording medium. It is a very important technique for compatibility between a DVD and a CD-R to enable a single optical pickup to use both light whose wavelength is 780nm and light whose wavelength is 650nm. If a disk having a different specification is loaded, an optical aberration occurs due to a change in the thickness of the disk and a variation of the wavelength and numerical aperture. Thus, an optical pickup which solves an optical aberration and is compatible with optical disks having a respectively different specification as well is being vividly under study. As a result, optical pickups compatible with optical disks having a respectively different specification are being manufactured.

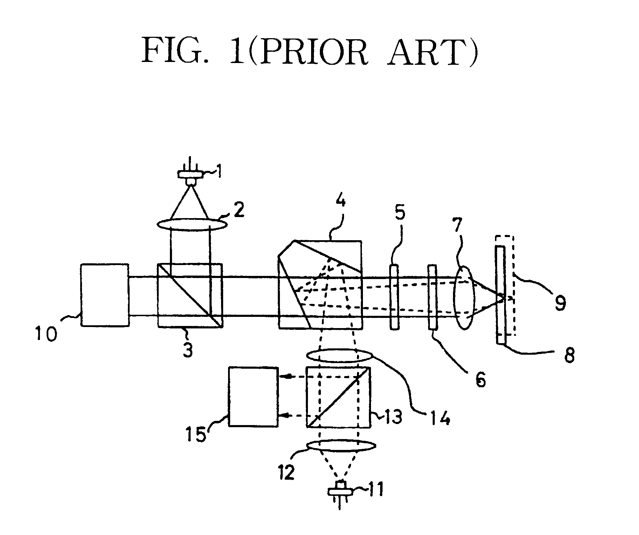

An existing optical pickup which is compatible with a DVD and a CD-R will be described below with reference to Figure 1.

Figure 1 shows an existing optical pickup which uses a conventional objective lens. The optical pickup shown in Figure 1 uses laser light whose wavelength is 635nm during reproduction of a DVD, and uses laser light whose wavelength is 780nm during recording and reproduction of a CD-R. The light whose wavelength is 635nm emitted from a light source 1 being a laser diode is incident to a collimating lens 2. The light beams are shown as solid lines. The collimating lens 2 makes the incident light parallel light. The light having passed through the collimating lens 2 is reflected from a polarization beam splitter 3, and then proceeds to an interference filter type prism 4.

Meanwhile, the light whose wavelength is 780nm emitted from a light source 11 being a laser diode passes through a collimating lens 12, a beam splitter 13 and a converging lens 14 in turn, and then proceeds to the prism 4. The light beams are shown as dotted lines. The prism 4 totally transmits the light whose wavelength is 635nm which is incident after being reflected by the polarization beam splitter 3, and totally reflects the light having a wavelength of 780nm which is converged by the converging lens 14. As a result, the light emitted from the light source 1 is incident to a wave plate 5 in the form of parallel light by the collimating lens 2, and the light emitted from the light source 11 is incident to the wave plate 5 in the form of diverging light by the converging lens 14 and the prism 4. The light transmitting the wave plate 5 is incident to an objective lens 7 after passing through a thin-film type variable iris 6.

The objective lens 7 is designed to focus on an information recording surface of a DVD 8 having a thickness of O.6mm, in which the light whose wavelength is 635nm having passed through a variable iris 6 is focused on the information recording surface of the DVD 8. As a result, the light reflected from the information recording surface of the DVD 8 contains the information recorded on the information recording surface. The reflected light transmits through the polarization beam splitter 3 and is detected by an optical detector 10.

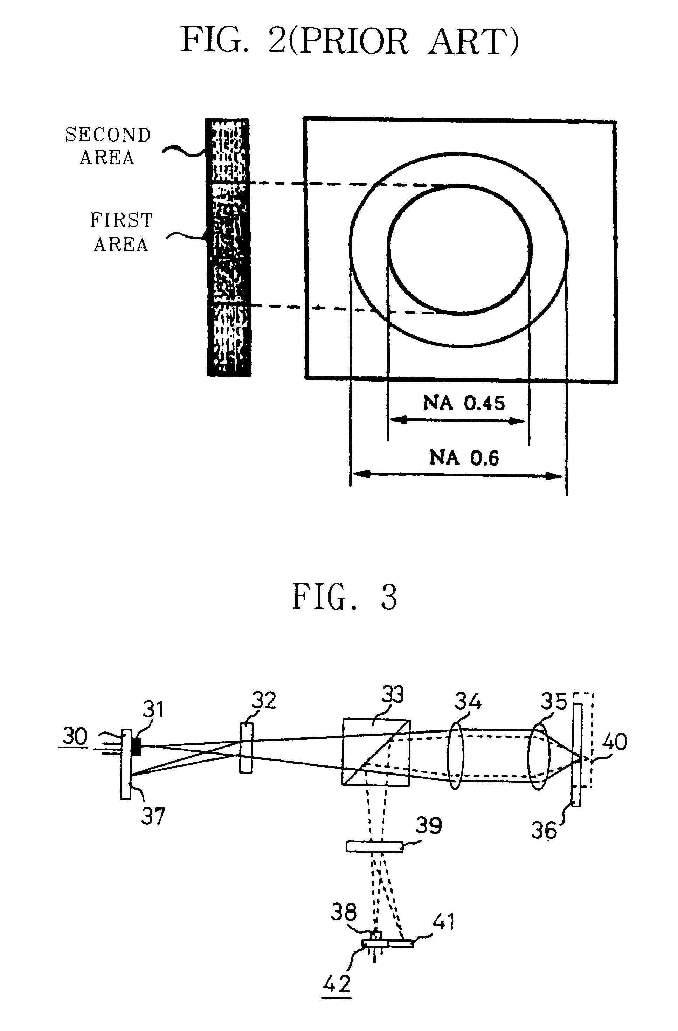

The objective lens 7 also focuses the light whose wavelength is 780nm having passed through the variable iris 6 on the information recording surface of a CD-R 9 having a thickness of 1.2mm. However, spherical aberration occurs due to a difference between the DVD 8 and the CD-R 9 in thickness. The spherical aberration is due to the fact that the information recording surface of the CD-R 9 is located at a farther place from the objective lens 7 along its optical axis than that of the DVD 8. When the variable iris 6 to be described later with reference to Figure 2 is used, the light whose wavelength is 780nm forms an optimal-sized optical spot on the information recording surface of the CD-R 9. The light whose wavelength is 780nm reflected from the CD-R 9 is reflected by the beam splitter 13 and then is detected by the optical detector 15.

The variable iris 6 of Figure 1 has a thin-film type structure which can selectively transmit the light incident to an area identical to a diameter of the objective lens 7, that is, an area having a numerical aperture (NA) not more than 0.6 as shown in Figure 2. In other words, the variable iris 6 is segmented into an "area 1" which transmits both the light whose wavelength is 635nm and the light whose wavelength is 780nm, and an "area 2" which totally transmits the light whose wavelength is 635nm and totally reflects the light whose wavelength is 780nm. The area 1 has the numerical aperture (NA) not more than 0.45, and the area 2 is an outer area of the area 1. The area 1 is also formed of a quartz (SiO₂) thin film to remove optical aberration occurring in the area 2 formed of a dielectric thin film. Using the variable iris 6, the light whose wavelength is 780nm which transmits through the area 1 of the numerical aperture (NA) not more than 0.45 forms an optical spot appropriate for the information recording surface of the CD-R 9 thereon. As a result, when a loaded optical disk is changed from the DVD 8 to the CD-R 9, the optical pickup of Figure 1 can be compatibly used with an optimized optical spot.

However, the above-described optical pickup of Figure 1 should achieve a finite optical system with respect to the light whose wavelength is 780nm, in order to remove spherical aberration occurring due to compatibility between a DVD and a CD-R. Accordingly, the optical system becomes complicated, which makes it difficult to assemble optical components. Also, an optical path difference occurs between the light passing through the area 1 having the numerical aperture (NA) not more than 0.45 and the light passing through the area 2 having the numerical aperture (NA) not less than 0.45, due to a dielectric thin film which is formed in the area 2 having the numerical aperture (NA) in the variable iris 6 not less than 0.45. To remove this optical path difference, a particular optical thin film such as a quartz thin film needs to be formed on the area 1. For this reason, a quartz thin film is formed on the area 1 and a multi-layered thin film is formed on the area 2, which causes a complicated manufacturing process. Also, the thickness of the thin film should be adjusted on a micrometer (*µ*m) scale, which does not fit mass-production. Even though a direct overwrite technique for performing a reproduction operation at the same time when performing a recording operation is known as a technique using light beams of a respectively different wavelength and a single lens, such a direct overwrite technique cannot be applied to disks of a respectively different specification in order to perform recording and reproduction operations.

With a view to solve or reduce the above problems, it is an aim of embodiments of the present invention to provide an optical pickup including an objective lens which can be compatible with a plurality of optical disks, using one or more light sources, in which a collimating lens and the objective lens are shared along a respective optical path from the light source to the disk.

According to a first aspect of the invention, there is provided an optical pickup comprising: at least one laser source; an objective lens to focus light beam emitted from the laser source on an information recording surface of each of the plurality of optical recording media as an optimal optical spot; and an optical detector to detect the light beam transmitted through the objective lens after being reflected from the information recording surface of the optical recording medium on which the optical spot has been formed, wherein the objective lens includes an inner area, an annular lens area and an outer area centered at the optical axis of the objective lens, the inner area having an aspherical surface which is optimized to both a relatively thin first optical recording medium and a relatively thick second optical medium, the annular lens area having an aspherical surface optimized to the second optical recording medium, and the outer area having an aspherical surface optimized to the first optical recording medium.

Preferably, said objective lens has a step difference between the inner area and the annular lens area, and the step difference generates an optical aberration which is an integer multiple of the wavelength of the light used for reproduction of the second optical recording medium.

Said objective lens may have a step difference between the inner area and the outer area, and the step difference generates an optical aberration which is an integer multiple of the wavelength of the light used for reproduction of the first optical recording medium.

For a better understanding of the invention, and to show how embodiments of the same may be carried into effect, reference will now be made, by way of example, to the accompanying diagrammatic drawings, in which:
Figure 1 is a view showing an existing optical pickup which uses a conventional objective lens;
Figure 2 is a view for explaining a variable iris shown in Figure 1;
Figure 3 is a view showing an optical pickup including an objective lens according to a preferred embodiment of the present invention;
Figure 4 is a view showing an optical pickup including an objective lens according to another embodiment of the present invention;
Figure 5 is a view for explaining that the objective lens shown in Figures 3 and 4 forms an optical spot on an information recording surface of a plurality of optical disks;
Figure 6 shows an objective lens viewed from a light source in which the objective lens is segmented into an inner area, an annular lens area and an outer area;
Figure 7 is a view showing that the objective lens forms an optical spot on an information recording surface of a thin optical disk; and
Figure 8 is a view showing that the objective lens forms an optical spot on an information recording surface of a thick optical disk.

Preferred embodiments of the present invention will be described in detail with reference to the accompanying drawings.

Figure 3 shows an optical pickup including an objective lens according to a preferred embodiment of the present invention. The optical pickup shown in Figure 3 includes laser sources 31 and 38, a holographic beam splitters 32 and 39, a beam splitter 33, a collimating lens 34, an objective lens 35 and optical detectors 37 and 41. The laser light source 31 and the optical detector 37 are integrated into a single unit 30. The laser light source 38 and the optical detector 41 also are integrated into a single unit 42.

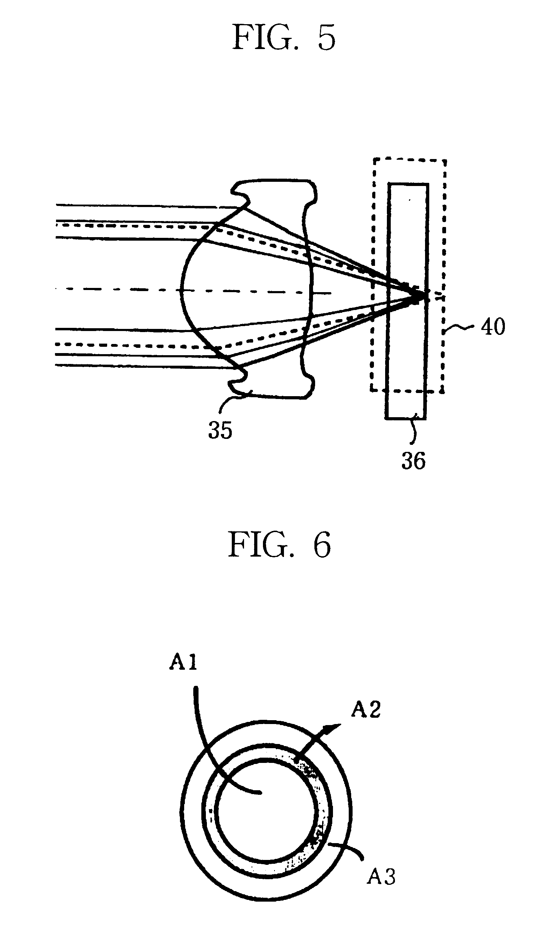

The operation of the optical pickup shown in Figure 3 will be described below in connection with optical recording media such as a DVD 36 being a thin disk and a CD-R 40 being a thick disk with reference to Figures 6, 7 and 8.

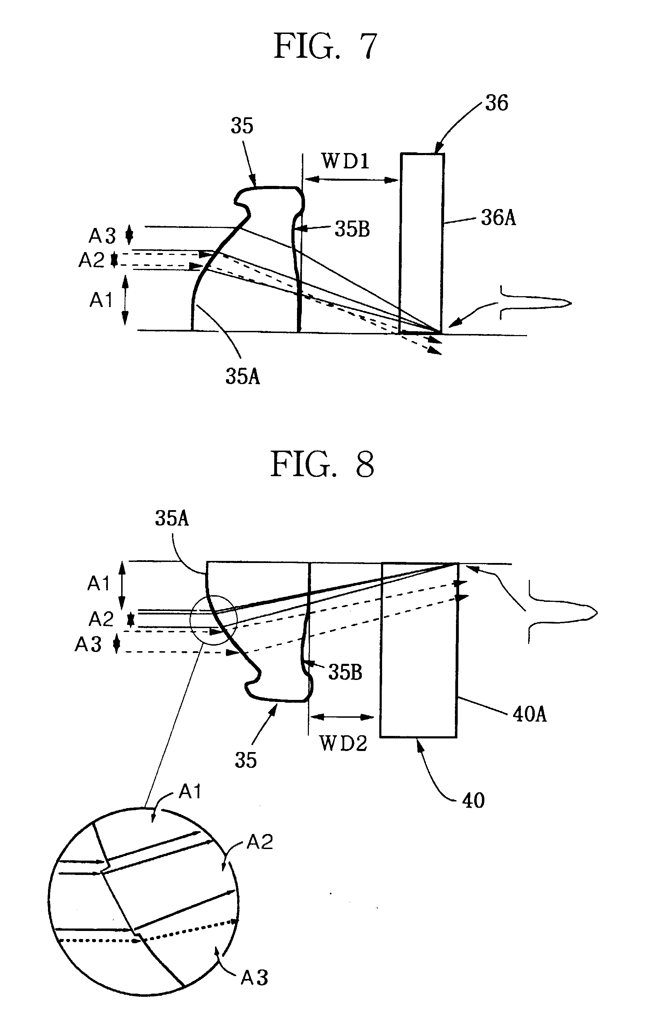

In the optical pickup of Figure 3, when reproducing information from DVD 36, the laser light of 650nm wavelength emitted from the laser source 31 is incident to the holographic beam splitter 32. The laser light is depicted as solid lines. The incident light transmits through the holographic beam splitter 32 and proceeds to the beam splitter 33. The collimating lens 34 collimates the light having passed through the beam splitter 33 in the form of parallel light. The light having passed through the collimating lens 34 is formed as an optical spot on the information recording surface of the DVD 36 by the objective lens 35. The light beam forming the optical spot on the information recording surface of the DVD 36 is shown as solid lines in Figure 5. The light reflected from the information recording surface of the DVD 36 passes through the objective lens 35 and the collimating lens 34, and then is incident to the beam splitter 33. The beam splitter 33 transmits the incident light. The optical path of the transmitted light is changed by the holographic beam splitter 32, and the light passed through the holographic beam splitter 32 is focused on the optical detector 37. As shown in Figures 6 and 7, the light having passed through the inner area A1 and the outer area A3 of the objective lens 35 is formed as a spot of a size from which information can be read on the information recording surface 36A of the DVD 36.

Meanwhile, when reproducing information from CD-R 40, the laser light of 780nm wavelength emitted from the laser source 38 is incident to the holographic beam splitter 39. The light is shown as dotted lines. The incident light transmits through the holographic beam splitter 39 and proceeds to the beam splitter 33. The collimating lens 34 collimates the light having reflected from the beam splitter 33 in the form of parallel light. The light having passed through the collimating lens 34 is formed as an optical spot on the information recording surface of the CD-R 40 by the objective lens 35. The light beam forming the optical spot on the information recording surface of the CD-R 40 is shown as dotted lines in Figure 5. The light reflected from the information recording surface of the CD-R 40 is focussed on the optical detector 41 by the holographic beam splitter 39. As shown in Figures 6 and 8, the light having passed through the inner area A1 and the annular lens area A2 of the objective lens 35 is formed as a spot of a size from which information can be read on the information recording surface 40A of the CD-R 40. Therefore, the optical detector 41 detects the light having passed through the inner area A1 and the annular lens area A2 of the objective lens 35.

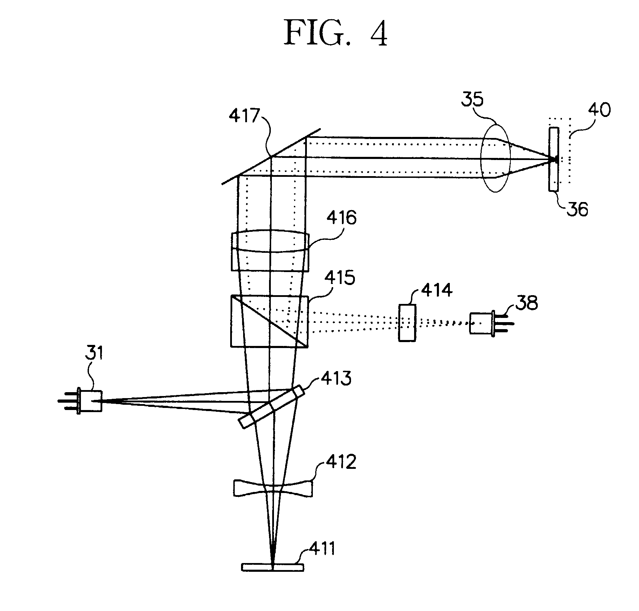

Figure 4 is a view showing an optical pickup including an objective lens according to another embodiment of the present invention. The optical pickup shown in Figure 4 includes optical sources 31 and 38, beam splitters 413 and 415, a collimating lens 416, a reflective mirror 417 and an objective lens 35. Also, an astigmatic lens 412 is disposed so that the light reflected from the information recording surface of the disks 36 and 40 is focussed by an optical detector 411. The optical elements shown in Figure 4 perform the same functions as those having the same reference numerals as those of Figure 3.

Referring to Figure 4, when reproducing information from the DVD 36, the light emitted from the laser source 31 is reflected from and transmitted through the beam splitters 413 and 415 and passes through the collimating lens 416. The reflective mirror 417 reflects the parallel light from the collimating lens 416 toward the objective lens 35. The objective lens 35 forms an optical spot on the information recording surface of the DVD 36. The light is shown as solid lines in the drawing. The light reflected from the DVD 36 returns to the collimating lens 416 and the beam splitters 415 and 413 and detected by the optical detector 411.

Meanwhile, when reproducing information from the CD-R 40, the light emitted from the laser source 38 is diffracted by a diffractive lattice 414 and reflected from the beam splitter 415. The reflected light passes through the collimating lens 416, the reflective mirror 417 and the objective lens 35, and is formed as an optical spot on the information recording surface of the CD-R 40. The optical detector 411 detects the light reflected from the CD-R 40.

The objective lens shown in Figure 3 and 4 will be described with reference to Figures 6, 7 and 8.

Figure 6 shows a lens surface of the objective lens 35 viewed from a light source in which the lens surface denoted as 35A in Figure 7 is segmented into an inner area A1, an annular lens area A2 and an outer area A3. Figure 7 shows optical paths when a working distance of the objective lens 35 is WD1 for reproduction of the DVD 36. Figure 8 shows optical paths when a working distance of the objective lens 35 is WD2 for reproduction of the CD-R 40.

As shown in Figure 6, the objective lens 35 is segmented into three areas. The inner area A1 is formed so that the minimum optical aberration is simultaneously satisfied for recording and reproduction of the information with respect to a DVD and a CD-R. That is, optimized aspherical surfaces are formed on the information recording surfaces 36A and 40A of the optical disks 36 and 40, in order to form the most preferable focal points. The annular lens area A2 is formed to have the minimum optical aberration only with respect to the CD-R. That is, an optimized aspherical surface is formed on the information recording surface 40A of the CD-R 40 to have the most preferable focal point. Finally, the outer area A3 is comprised of an optimized aspherical surface with respect to the DVD 36. Thus, when reproducing the DVD, the light having passed through the inner area A1 and the outer area A3 of the objective lens 35 is detected as shown as solid lines in Figure 7, while reproducing the CD-R, the light having passed through the inner area A1 and the annular lens area A2 of the objective lens 35 is detected as shown as solid lines in Figure 8. In order to form a plurality of lens surfaces of a respectively different shape on an identical lens as described above, the lens surface of the inner area A1 should be primarily worked with a lens data value, the lens surface of the annular lens area A2 should be then worked and the lens surface of the outer area A3 should be finally worked. As a result, a step difference is formed between the areas, which causes an optical aberration to occur. To solve this problem, the objective lens 35 of the embodiment is designed so that both a step difference between the inner area A1 and the annular lens area A2 of the objective lens 35 when reproducing the CD-R and a step difference between the inner area A1 and the outer area A3 when reproducing the DVD become an integer multiple of the light wavelength. Here, it means that an optical aberration does not occur that a step difference is an integer multiple of the light wavelength. The enlarged portion of Figure 8 shows a step difference of each area at the annular lens area A2 of the objective lens 35.

As described above, the optical pickup according to the present invention is compatible with optical disks of a respectively different specification irrespective of the thickness of the disks. Even in the case that two or more kinds of the laser light are used, a single objective lens is used to form an optical pickup.

While only certain embodiments of the invention have been specifically described herein, it will be apparent that numerous modifications may be made thereto without departing from the scope of the invention.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical pickup which is compatible with a plurality of optical recording media (36, 40) having different thicknesses, the optical pickup comprising:
at least one laser source (31, 38);
an objective lens (35) to focus light beam emitted from the laser source (31, 38) on an information recording surface of each of the plurality of optical recording media (36, 40) as an optimal optical spot; and
an optical detector (37, 41) to detect the light beam transmitted through the objective lens (35) after being reflected from the information recording surface of the optical recording medium (36, 40) on which the optical spot has been formed,
wherein the objective lens (35) includes an inner area (A1), an annular lens area (A2) and an outer area (A3) centered at the optical axis of the objective lens (35), said inner area (A1) having an aspherical surface which is optimized to both a relatively thin first optical recording medium (36) and a relatively thick second optical medium (40), said annular lens area (A2) having an aspherical surface optimized to the second optical recording medium (40), and said outer area (A3) having an aspherical surface optimized to the first optical recording medium (36).

2. The optical pickup according to claim 1, wherein said objective lens (35) has a step difference between the inner area (A1) and the annular lens area (A2), and the step difference generates an optical aberration which is an integer multiple of the wavelength of the light used for reproduction of the second optical recording medium (40).

3. The optical pickup according to claim 1 or 2, wherein said objective lens (35) has a step difference between the inner area (A1) and the outer area (A3), and the step difference generates an optical aberration which is an integer multiple of the wavelength of the light used for reproduction of the first optical recording medium (36).
